# EUROPÄISCHE PATENTSCHRIFT

(11) **EP 3 169 978 B1**
(45) Veröffentlichungstag und Bekanntmachung des Hinweises auf die Patenterteilung: **20.12.2023**
(21) Anmeldenummer: 15741143.0
(22) Anmeldetag: 15.07.2015
(51) Int. Cl.: G01C 21/36, G01C 21/00, H04W 4/02, H04W 4/44

(54) **VERFAHREN UND VORRICHTUNG ZUR ERFASSUNG VON ORTSABHÄNGIGEN DATEN MITTELS EINES FAHRZEUGS**
METHOD AND DEVICE FOR DETECTING LOCATION DEPENDENT DATA BY MEANS OF A VEHICLE
PROCÉDÉ ET DISPOSITIF POUR ACQUÉRIR DES DONNÉES DÉPENDANTES DE LA LOCALISATION AU MOYEN D'UN VEHICULE

(30) Priorität: 17.07.2014 DE 102014213915
(43) Veröffentlichungstag der Anmeldung: 24.05.2017
(73) Patentinhaber: Volkswagen Aktiengesellschaft, 38440 Wolfsburg (DE)
(72) Erfinder: SCHWEMMER, Klaus, 38176 Wendeburg (DE)
(74) Vertreter: Gulde & Partner
(86) Internationale Anmeldenummer: PCT/EP2015/066125
(87) Internationale Veröffentlichungsnummer: WO 2016/008907

(56) Entgegenhaltungen:
- EP-A1- 2 442 291
- EP-A2- 1 903 310
- WO-A1-2012/062764
- US-A1- 2010 134 637
- US-A1- 2010 241 349
- US-A1- 2013 250 119
- US-A1- 2014 136 098

## Beschreibung

Verfahren und Vorrichtung zur Erfassung von ortsabhängigen Daten mittels eines Fahrzeugs Die vorliegende Erfindung betrifft ein Verfahren zum Erfassen von ortsabhängigen Daten mittels eines Fahrzeugs. Weiterhin betrifft die vorliegende Erfindung eine Vorrichtung zum Erfassen von ortsabhängigen Daten, wobei die Vorrichtung in dem Fahrzeug ein Ortungssystem, eine Kommunikationseinrichtung, eine Steuereinrichtung und mindestens einen Sensor umfasst und wobei mindestens ein ortsbezogenes Datenpaket auf mindestens einer externen Einrichtung bereitgestellt ist.

Aus der US 2013/0057686 A1 ist eine Vorrichtung und Verfahren zur Überwachung von Parkplätzen bekannt. Das Dokument bezieht sich insbesondere auf einen Bildaufnahmeprozess und Auswertung des Bildes auf freie Parkplätze und Übermittlung der Information an ein weiteres Fahrzeug.

US 2010/134637 A1 offenbart eine ortsbezogene Erfassung von Bilddaten durch Entsendung eines Fahrzeugs mit einem Kamera an den jeweiligen Standort durch Senden eines Auftrags von einem entfernten Server, wobei eine gezielte Bilddatenerfassung erreicht wird,

WO 2012/062764 A1 beschreibt ein Datenverarbeitungssystem, bei dem Probefahrzeuge lokale Wetterdaten von Regensensoren erfassen und sie zusammen mit entsprechenden Standortdaten automatisch an einen Server zur Aktualisierung von Verkehrs-/Kartendaten senden können Weiterhin ist aus der Smartphone-Applikation "Streetspotr" bekannt, Minijobs bzw. Aufträge zu erledigen. Ziel der Applikation ist es, Informationen mit dem Smartphone zu sammeln und an einen Server zu übermitteln.

Der vorliegenden Erfindung liegt die Aufgabe zugrunde, ein Verfahren und eine Vorrichtung der eingangsgenannten Art anzugeben, bei der Aufträge bzw. Minijobs einfacher erledigt bzw. bearbeitet werden können.

Erfindungsgemäß wird diese Aufgabe durch ein Verfahren mit den Merkmalen des unabhängigen Anspruchs 1 und durch eine Vorrichtung mit den Merkmalen des unabhängigen Anspruchs 4 gelöst. Vorteilhafte Ausgestaltungen und Weiterbildungen ergeben sich aus den abhängigen Ansprüchen.

Die Erfindung beruht demnach auf dem Gedanken, ortsabhängige Daten mittels eines Verfahrens zu erfassen, wobei das Verfahren folgende Schritte umfasst:
- Bereitstellen mindestens eines ortsbezogenen Datenpakets auf mindestens einer externen Einrichtung;
- Verbinden einer Kommunikationseinrichtung in dem Fahrzeug mit der mindestens einen externen Einrichtung;
- Empfangen des mindestens einen ortsbezogenen Datenpakets von der mindestens einen externen Einrichtung durch die Kommunikationseinrichtung in dem Fahrzeug;
- Extrahieren mindestens eines Auftrags aus dem mindestens einen ortsbezogenen Datenpaket durch eine Steuereinrichtung in dem Fahrzeug;
- Erfassen von Daten, welche von dem mindestens einen Auftrag gefordert werden, mit mindestens einem Sensor des Fahrzeugs, wobei das Fahrzeug weiterhin ein Navigationssystem umfasst. Das Navigationssystem erstellt abhängig von dem Ort, an dem die Erfassung der geforderten Daten durchgeführt werden soll, und der Position des Fahrzeugs einen Routenverlauf. Ferner ist ein Endgerät an die Steuereinrichtung gekoppelt und/oder auf einem Infotainmentsystem in dem Fahrzeug wird eine Applikation ausgeführt. Die geforderten Daten werden mit einer Applikation des Endgerätes vor der Übermittlung auf die mindestens eine externe Einrichtung bearbeitet und/oder die geforderten Daten werden mit der Applikation auf dem Infotainmentsystem in dem Fahrzeug vor der Übermittlung auf die mindestens eine externe Einrichtung bearbeitet und die geforderten Daten werden vor der Übermittlung von einem Nutzer in dem Fahrzeug freigegeben. Die geforderten Daten werden mittels der Kommunikationseinrichtung an die mindestens eine externe Einrichtung übermittelt. Die Erfassung der geforderten Daten erfolgt mittels mindestens einem der folgenden Sensoren:
- Temperatursensor
- Drucksensor
- Feuchtigkeitssensor
- Regensensor
- Helligkeitssensor
- Schallsensor
- Beschleunigungssensor
- Lautstärkensensor
- Kompass
- Geruchssensor
- Stoßdämpfersensor
- Gyrosensor.

Erfindungsgemäß zeichnet sich das ortsbezogene Datenpaket dadurch aus, dass das Datenpaket mindestens einen Auftrag beinhaltet, der sich auf einen bestimmten Ort, eine bestimmte Position oder einen bestimmten Ortsbereich bezieht. Der Auftrag kann beispielsweise das Sammeln von Informationen beinhalten.

Das Datenpaket wird laut der Erfindung auf einer externen Einrichtung bereitgestellt. Die externe Einrichtung ist beispielsweise ein Server, ein Smartphone oder ein Computer und ist nicht Bestandteil des Fahrzeugs. Zudem ist es möglich, mit der externen Einrichtung, beispielsweise über eine Datenfernübertragung, zu kommunizieren bzw. Daten auszutauschen.

Nach der Erfindung wird eine Verbindung zwischen einer Kommunikationseinrichtung in dem Fahrzeug mit der mindestens einen externen Einrichtung aufgebaut. Mittels der Kommunikationseinrichtung in dem Fahrzeug kann daraufhin das mindestens eine ortsbezogene Datenpaket empfangen werden. Dazu kann die Kommunikation über ein Mobilfunknetzwerk erfolgen. Die Kommunikationseinrichtung kann zudem in bereits existierende System, z.B. Car-Net integriert werden. Car-Net beinhaltet mobile Online-Dienste, wodurch beispielsweise Verkehrsinformationen online im Fahrzeug abgerufen werden können, Sonderziele (POI) eingegeben werden können und Fahrzeuginformationen außerhalb des Fahrzeugs abgerufen werden können.

Erfindungsgemäß extrahiert die Steuereinrichtung mindestens einen Auftrag aus dem mindestens einen ortsbezogenen Datenpaket. Zudem wertet die Steuereinrichtung das ortsbezogene Datenpaket auf eine bestimmte Position oder einen bestimmten Ortsbereich aus und ermittelt von dem mindestens einen Auftrag geforderte Daten. Die geforderten Daten können beispielsweise eine gewünschte Bilddatei bzw. Videodatei eines Plakats sein oder die Temperaturdaten an einer bestimmten Position und/oder Uhrzeit. Es ist außerdem möglich, dass für einen Auftrag mehrere Daten erforderlich sind.

Erfindungsgemäß erfasst weiterhin mindestens ein Sensor des Fahrzeugs die von dem mindestens einen Auftrag geforderten Daten. Beinhaltet beispielsweise der mindestens eine Auftrag das Fotografieren eines Plakats, so wird demnach eine Kamera in dem Fahrzeug das Plakat fotografieren.

In einer weiteren Ausgestaltung werden die geforderten Daten mit dem mindestens einen Sensor des Fahrzeugs erst dann erfasst, wenn ein Ort, an dem die Erfassung der geforderten Daten durchgeführt werden soll, mit einer Position innerhalb eines bestimmten Ortsbereiches des Fahrzeugs übereinstimmt. Unter dem bestimmten Ortsbereich ist ein Bereich zu verstehen, in dem mindestens ein Sensor die geforderten Daten erfassen kann. Die Position des Fahrzeugs wird dabei mit einem Ortungssystem bestimmt. Der bestimmte Ortsbereich ergibt sich aus der Auswertung des ortsbezogenen Datenpakets durch die Steuereinrichtung.

In einer weiteren Ausgestaltung kann die Erfassung der geforderten Daten mittels einer Kombination aus einer Kamera, einem Temperatursensor, einem Drucksensor, einem Feuchtigkeitssensor, einem Regensensor, einem Helligkeitssensor, einem Schallsensor, einem Beschleunigungssensor, einem Lautstärkensensor, einem Positionssensor, einem Kompass, einem Geruchssensor oder einem Stoßdämpfersensor oder einem Gyrosensor erfolgen.

Die Kamera kann eine Kamera mit einer festen oder einer beweglichen Orientierungsrichtung sein. Dabei kann die Kamera beispielsweise eine Frontkamera, eine Heckkamera oder eine zur Seite gerichtete Kamera sein.

Das erfindungsgemäße Verfahren umfasst zusätzlich das Berechnen eines Routenverlaufes für ein Navigationssystem. Die Berechnung erfolgt abhängig der aktuellen Position des Fahrzeugs und dem Ort, an dem die Erfassung der geforderten Daten durchgeführt werden soll. Befindet sich das Fahrzeug nicht an dem bestimmten Ortsbereich, an dem mindestens ein Sensor die geforderten Daten erfassen kann, wird optional ein Routenverlauf für das Navigationssystem berechnet. Weiterhin ist es auch denkbar, dass der bestimmte Ortsbereich auf dem Navigationssystem dargestellt wird, ohne dass ein Routenverlauf für das Navigationssystem berechnet wird.

Erfindungsgemäß werden die geforderten Daten, sobald sie von mindestens einem Sensor erfasst wurden, mittels der Kommunikationseinrichtung an die mindestens eine externe Einrichtung übermittelt. Nach der Erfindung können die geforderten Daten zusätzlich vor der Übermittlung an die mindestens eine externe Einrichtung auf einem Infotainmentsystem und/oder auf einem Endgerät, welches an die Steuereinrichtung gekoppelt ist, mit einer dazu ausgelegten Applikation bearbeitet werden. Beispielsweise können dadurch geforderte Daten angepasst, korrigiert oder verändert werden. Weiterhin können somit Daten hinzugefügt werden, die nicht durch einen Sensor erfasst wurden oder erfassbar sind. Weiterhin werden die geforderten Daten vor der Übermittlung von einem Nutzer in dem Fahrzeug freigegeben.

In einer weiteren Ausgestaltung besteht die Möglichkeit, die geforderten Daten auf einem externen Speichermedium abzulegen. Dadurch wird beispielsweise ermöglicht, die geforderten Daten auf einen USB-Stick oder einer externen Festplatte abzuspeichern und auf einem Computer zu bearbeiten.

In einer weiteren Ausgestaltung wird zusätzlich ein Inhalt des mindestens einen Auftrags auf einer Anzeige in dem Fahrzeug dargestellt, sobald sich das Fahrzeug dem Ort, an dem der mindestens eine Auftrag durchgeführt werden soll, nähert. Somit wird für einen Fahrzeugführer leicht ersichtlich, welche Daten gefordert sind und wo die Daten zu erfassen sind.

Die Erfindung beruht weiterhin auf dem Gedanken, eine Vorrichtung zum Erfassen von ortsabhängigen Daten bereitzustellen, wobei die Vorrichtung Mittel zur Ausführung der Schritte des zuvor beschriebenen Verfahrens aufweist.

Die Erfindung wird nun anhand von Ausführungsbeispielen mit Bezug zu den Zeichnungen erläutert.
- Fig. 1: zeigt eine erfindungsgemäße Vorrichtung,
- Fig. 2: zeigt ein Verfahrensfließbild des erfindungsgemäßen Verfahrens,
- Fig. 3: zeigt ein Infotainmentsystem in einer ersten Darstellung, gekoppelt mit einem externen Speichermedium,
- Fig. 4: zeigt ein Infotainmentsystem in einer weiteren Darstellung, gekoppelt mit einem mobilen Endgerät.

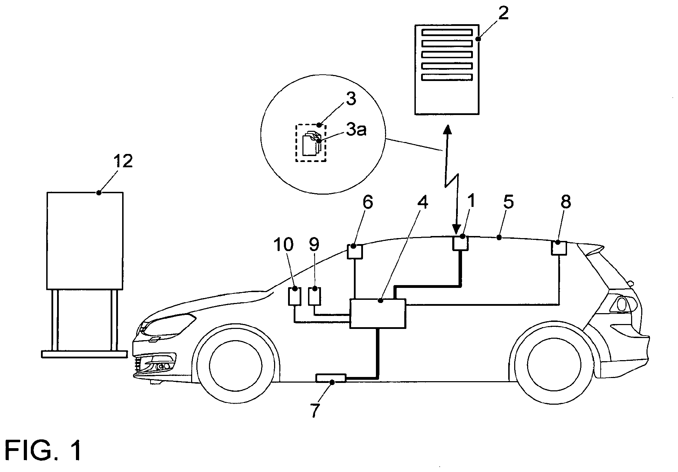

Mit Bezug zu den Fig. 1 bis 4 werden die Ausführungsbeispiele des erfindungsgemäßen Verfahrens und der Vorrichtung beschrieben:
Fig. 1 zeigt ein Fahrzeug 5 mit der erfindungsgemäßen Vorrichtung und einem externen Server 2, wobei die Vorrichtung in das Fahrzeug 5 integriert ist. Weiterhin zeigt Fig. 1 eine Steuereinrichtung 4, die zumindest einen Speicher umfasst, eine Infotainmentsystem 10 zur Darstellung und Bearbeitung von Informationen, ein Navigationssystem 9 zur Erstellung eines Routenverlaufs, eine Kommunikationseinrichtung 1, die mit dem externen Server 2 kommuniziert, einen Temperatursensor 7 zur Erfassung von dem Auftrag geforderten Daten und ein Ortungssystem 8, welches die aktuelle Position des Fahrzeugs erfasst. Das Fahrzeug kann zudem auch weitere Sensoren wie beispielsweise Drucksensoren, Feuchtigkeitssensoren, Regensensoren, Helligkeitssensoren, Schallsensoren, Beschleunigungssensoren, Lautstärkensensoren, Positionssensoren, Geruchssensoren oder einen Kompass umfassen, die in dem vorliegenden Ausführungsbeispiel nicht dargestellt sind. Die Steuereinrichtung 4 ist so ausgebildet, dass die Kommunikationseinrichtung 1 mit dem externen Server 2 verbunden werden kann. Ein vom externen Server 2 versendetes ortsbezogenes Datenpaket 3 wird durch die Kommunikationseinrichtung 1 empfangen. Es können auch mehrere ortsbezogene Datenpakete 3 empfangen werden. Durch eine Steuereinrichtung 4 in dem Fahrzeug 5 wird ein Auftrag 3a aus dem ortsbezogenen Datenpaket 3 extrahiert. Zudem ist ein Plakat 12 dargestellt. Beispielhaft kann der Auftrag 3a erfordern, dass das Plakat 12 erfasst wird. Sobald das Plakat 12 in dem Erfassungsbereich von der Kamera 6 liegt, kann die Kamera das Plakat 12 erfassen und ein Bild oder Video in einer internen Speichereinrichtung abgelegt werden.

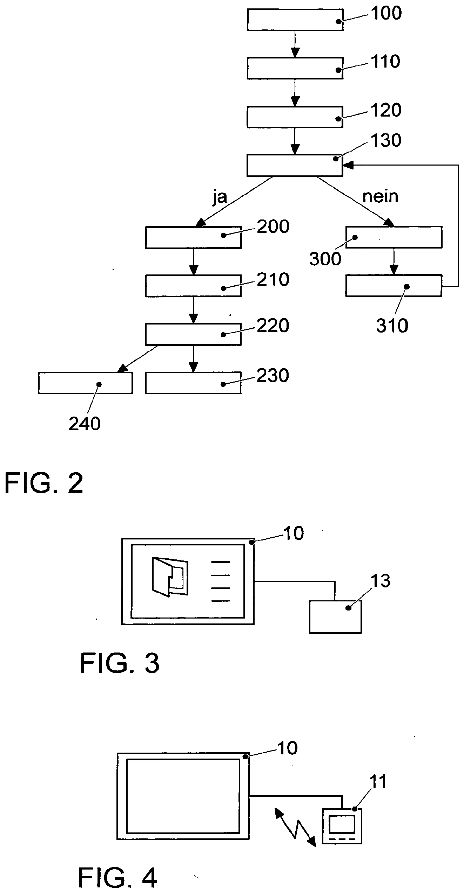

In Fig. 2 zeigt schematisch ein Ablaufdiagramm des erfindungsgemäßen Verfahrens. Die Kommunikationseinrichtung 1 stellt eine Verbindung zu dem externen Server 2 her 100. Daraufhin empfängt die Kommunikationseinrichtung 1 ein ortsbezogenes Datenpaket 3 110. Durch eine Steuereinrichtung 4 in dem Fahrzeug 5 wird ein Auftrag aus dem ortsbezogenen Datenpaket 3 extrahiert. Daraufhin prüft die Steuereinrichtung 4 mit Hilfe des Ortungssystems 8, ob die Position des Fahrzeugs 5 mit dem Auftrag übereinstimmt 130. Stimmt die Position aus dem Auftrag nicht mit der Position des Fahrzeugs 5 überein, so wird ein Routenverlauf mit Hilfe eines Navigationssystems 9 berechnet 300. Daraufhin überprüft das Navigationssystem 9, ob das Fahrzeug 5 dem Routenverlauf folgt 310. Falls die Position des Fahrzeugs 5 mit dem Auftrag übereinstimmt, so werden die von dem Auftrag geforderten Daten mit einem Sensor 6-7 erfasst 200. Danach folgt eine Bearbeitung der geforderten Daten auf einem Infotainmentsystem 10 oder einem mobilen Endgerät 11 (Fig. 4). Daraufhin werden die geforderten Daten mittels der Kommunikationseinrichtung 1 an den externen Server 2 übermittelt 240 oder auf einem externen Speichermedium 13 gespeichert 230. Vor der Übermittelung auf den externen Server 2 oder auf das externe Speichermedium 13 erfolgt eine Freigabe 220 auf dem Infotainmentsystem 10.

Fig. 3 zeigt das Infotainmentsystem 10, welches mit einem externen Speichermedium 13 gekoppelt ist. Mittels des Infotainmentsystems 10 kann eine Bearbeitung der geforderten bzw. der erfassten Daten durchgeführt werden. Die geforderten bzw. erfassten Daten können zudem auf dem externen Speichermedium 13 abgelegt werden.

Fig. 4 zeigt das Infotainmentsystem 10 gekoppelt mit einem mobilen Endgerät 11, wobei die Verbindung drahtlos und/oder drahtgebunden hergestellt ist oder herstellbar ist. Dabei kann eine Bearbeitung der geforderten bzw. der erfassten Daten entweder auf dem Infotainmentsystem 10 oder auf dem mobilen Endgerät 11 erfolgen. Die Freigabe der Daten erfolgt entweder durch eine Betätigung auf dem Infotainmentsystem 10 oder auf dem mobilen Endgerät 11. Das mobile Endgerät 11 kann auch als externes Speichermedium 13 verwendet werden. Die Kopplung zwischen dem Infotainmentsystem 10 und dem mobilen Endgerät 11 kann mittels dem externen Server 2 erfolgen. Eine Bearbeitung der geforderten bzw. der erfassten Daten kann auf dem externen Server 2 erfolgen. Somit kann der externe Server 2 hinsichtlich der geforderten bzw. erfassten Daten Datenschutz gewährleisten und zentrale Datenanalyse ermöglichen.

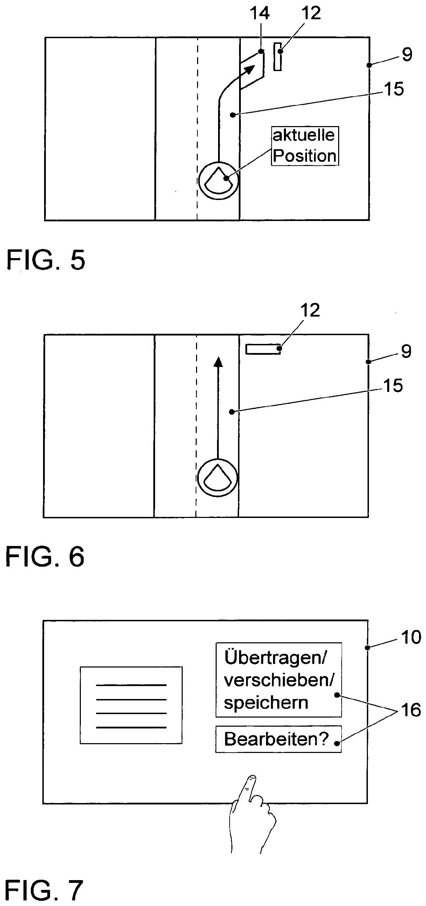

In Fig. 5 mit Bezug auf Fig. 1 und 2 erhält der Fahrzeugführer einen Auftrag 3a, der aus dem ortsbezogenen Datenpaket 3 extrahiert wurde und der sich auf einen bestimmten Ort, eine bestimmte Position oder einen bestimmten Ortsbereich bezieht. Beispielsweise umfasst der Auftrag 3a, ein Plakat 12 fotographisch zu erfassen und die Ortskoordinaten des Plakats 12. Im dargestellten Ausführungsbeispiel stimmt die Position des Fahrzeugs 5 nicht mit den Ortskoordinaten aus dem Auftrag 3a überein. Das Navigationssystem 9 berechnet eine Route und eine optimale Position 14, um das Plakat mit der Kamera 6 des Fahrzeuges 5 zu erfassen. Sobald das Fahrzeug 5 die Position 14 oder annähernd die Position 14 erreicht hat, wird entsprechend dem Auftrag 3a das Plakat 12 mit der Kamera 6 erfasst. Das erfasste Kamerabild wird in einem Speicher im Fahrzeug gespeichert.

In Fig. 6 mit Bezug auf Fig. 1 und 2 erhält der Fahrzeugführer einen Auftrag 3a, der aus dem ortsbezogenen Datenpaket 3 extrahiert wurde und der sich auf einen bestimmten Ort, eine bestimmte Position oder einen bestimmten Ortsbereich bezieht. Beispielsweise umfasst der Auftrag 3a, ein Plakat 12 fotographisch zu erfassen und die Ortskoordinaten des Plakats 12. Im dargestellten Ausführungsbeispiel stimmt die Position des Fahrzeugs 5 nicht mit den Ortskoordinaten aus dem Auftrag 3a überein. Das Navigationssystem 9 berechnet eine Route, so dass das Plakat 12 im Vorbeifahren mit der Kamera 6 erfasst wird, sobald das Fahrzeug 5 sich in einer Position befindet, von der aus das Plakat 12 erfassbar ist. Auch können mehrere Fotos von dem Plakat aufgenommen werden, um zumindest ein für den Auftrag 3a nutzbares Foto von dem Plakat 12 zu erhalten. Das mindestens eine erfasste Kamerabild wird in einem Speicher im Fahrzeug gespeichert.

In Fig.7 mit Bezug auf Fig. 1 und 2 wurde das Plakat 12 mit der Kamera 6 erfasst und in einem Speicher im Fahrzeug gespeichert. Über mindestens ein Bedienelement 16, das beispielsweise auf dem Display des Infotainmentsystems 10 angezeigt wird, kann ein Anwender auswählen, ob er das Foto auf einen externen Server 2, ein mobiles Endgerät 11 und/oder ein externes Speichermedium 13 übertragen/verschieben/speichern möchte oder vorher bearbeiten möchte. Die Bearbeitung erfolgt entweder auf dem Infotainmentsystem 10 oder auf einem mobilen Endgerät 11. Nach erfolgreicher Bearbeitung werden die Daten bevorzugt auf den externen Server 2 übermittelt und/oder auf einem externen Speichermedium 13 abgelegt.

In einer weiteren Ausführungsform stellt ein Smartphone als mobiles Endgerät 11 eine mobile Datenverbindung mit einem externen Server 2 her. Auf das Smartphone wird ein ortsbezogenes Datenpaket 3 geladen und ein Auftrag und eine Position, an der die von dem Auftrag geforderten Daten erfasst werden sollen, wird extrahiert. Daraufhin wird das Smartphone mit der Steuereinrichtung 4 des Fahrzeugs 5 gekoppelt. Wenn die Position des Fahrzeugs 5 nicht mit der Position aus dem Auftrag übereinstimmt, berechnet das Navigationssystem 9 eine Route und eine optimale Position 14, um das Plakat 12 mit der Kamera 6 des Fahrzeuges 5 zu erfassen. Wurde das Plakat 12 erfasst und das Foto in einem Speicher im Fahrzeug gespeichert, so kann ein Anwender über mindestens ein Bedienelement 16, das beispielsweise auf dem Display des Infotainmentsystems 10 angezeigt wird, auswählen, ob er das Foto auf einen externen Server 2, ein mobiles Endgerät 11 und/oder ein externes Speichermedium 13 übertragen möchte oder vorher bearbeiten möchte. Die Bearbeitung erfolgt entweder auf dem Infotainmentsystem 10 oder auf einem mobilen Endgerät 11. Nach erfolgreicher Bearbeitung werden die Daten bevorzugt auf den externen Server 2 übermittelt und/oder auf einem externen Speichermedium 13 abgelegt.

### Bezugszeichenliste

- 1: Kommunikationseinrichtung
- 2: externer Server
- 3: ortsbezogenes Datenpaket
- 3a: Auftrag
- 4: Steuereinrichtung
- 5: Fahrzeug
- 6: Kamera
- 7: Temperatursensor
- 8: Ortungssystem
- 9: Navigationssystem
- 10: Infotainmentsystem
- 11: mobiles Endgerät
- 12: Plakat
- 13: externes Speichermedium
- 14: optimale Position
- 15: Routenverlauf
- 16: Bedienelement

## Patentansprüche

1. Verfahren zum Erfassen von ortsabhängigen Daten mittels eines Fahrzeugs (5), umfassend:
- Bereitstellen mindestens eines ortsbezogenen Datenpakets (3) auf mindestens einer externen Einrichtung (2);
- Verbinden einer Kommunikationseinrichtung (1) in dem Fahrzeug (5) mit der mindestens einen externen Einrichtung (2);
- Empfangen des mindestens einen ortsbezogenen Datenpakets (3) von der mindestens einen externen Einrichtung (2) durch die Kommunikationseinrichtung (1) in dem Fahrzeug (5);
- Extrahieren mindestens eines Auftrags (3a) aus dem mindestens einen ortsbezogenen Datenpaket (3) durch eine Steuereinrichtung (4) in dem Fahrzeug (5);
- Bestimmen der Position des Fahrzeugs (5) mittels eines Ortungssystems (8);
- Erfassen von Daten, welche von dem mindestens einen Auftrag (3a) gefordert werden, mit mindestens einem Sensor des Fahrzeugs (5), wobei die geforderten Daten mittels der Kommunikationseinrichtung (1) an die mindestens eine externe Einrichtung (2) übermittelt werden, wobei das Fahrzeug (5) weiterhin ein Navigationssystem (9) umfasst, wobei das Navigationssystem (9) abhängig von dem Ort, an dem die Erfassung der geforderten Daten durchgeführt werden soll, und der Position des Fahrzeugs (5) einen Routenverlauf (15) erstellt, und wobei ein Endgerät an die Steuereinrichtung (4) gekoppelt ist und/oder auf einem Infotainmentsystem (10) in dem Fahrzeug (5) eine Applikation ausgeführt wird, **dadurch gekennzeichnet, dass** die geforderten Daten mit einer Applikation des Endgerätes (11) vor der Übermittlung auf die mindestens eine externe Einrichtung (2) bearbeitet werden und/oder die geforderten Daten mit der Applikation auf dem Infotainmentsystem (10) in dem Fahrzeug (5) vor der Übermittlung auf die mindestens eine externe Einrichtung (2) bearbeitet werden und die geforderten Daten vor der Übermittlung von einem Nutzer in dem Fahrzeug (5) freigegeben werden,
- und **dadurch gekennzeichnet, dass** die Erfassung der geforderten Daten mittels mindestens einem der folgenden Sensoren erfolgt:
- Temperatursensor (7)
- Drucksensor
- Feuchtigkeitssensor
- Regensensor
- Helligkeitssensor
- Schallsensor
- Beschleunigungssensor
- Lautstärkensensor
- Kompass
- Geruchssensor
- Stoßdämpfersensor
- Gyrosensor.

2. Verfahren nach Anspruch 1, **dadurch gekennzeichnet, dass** die geforderten Daten mit dem mindestens einen Sensor (6, 7) des Fahrzeugs (5) erfasst werden, wenn ein Ort, an dem die Erfassung der geforderten Daten durchgeführt werden soll, mit einer Position innerhalb eines Ortsbereiches des Fahrzeugs (5) übereinstimmt.

3. Verfahren nach einem der vorhergehenden Ansprüche, **dadurch gekennzeichnet, dass** ein Inhalt des mindestens einen Auftrags auf einer Anzeige in dem Fahrzeug (5) dargestellt wird, sobald sich das Fahrzeug (5) dem Ort, an dem der mindestens eine Auftrag durchgeführt werden soll, nähert.

4. Vorrichtung zum Erfassen von ortsabhängigen Daten umfassend Mittel zur Ausführung der Schritte des Verfahrens nach einem der vorherigen Ansprüche.

## Claims

1. Method for detecting location-dependent data by means of a vehicle (5), comprising:
- providing at least one location-related data packet (3) on at least one external device (2);
- connecting a communication device (1) in the vehicle (5) to the at least one external device (2);
- receiving the at least one location-related data packet (3) from the at least one external device (2) via the communication device (1) in the vehicle (5);
- extracting at least one order (3a) from the at least one location-related data packet (3) via a control device (4) in the vehicle (5);
- determining the position of the vehicle (5) by means of a location system (8);
- detecting data, which are required by the at least one order (3a), with at least one sensor of the vehicle (5), the required data being transmitted by means of the communication device (1) to the at least one external device (2), the vehicle (5) further comprising a navigation system (9), the navigation system (9) generating a route course (15) depending on the location at which required data is to be detected, and on the position of the vehicle (5), a terminal being coupled to the control device (4) and/or an application being executed on an infotainment system (10) in the vehicle (5), **characterized in that** the required data are processed with an application of the terminal (11) before being transmitted to the at least one external device (2), and/or the required data are processed with the application on the infotainment system (10) in the vehicle (5) before being transmitted to the at least one external device (2), and the required data are released by a user in the vehicle (5) before being transmitted,
- and **characterized in that** the required data are detected by means of at least one of the following sensors:
- temperature sensor (7)
- pressure sensor
- moisture sensor
- rain sensor
- brightness sensor
- sound sensor
- acceleration sensor
- volume sensor
- compass
- odor sensor
- shock absorber sensor
- gyro sensor.

2. Method according to claim 1, **characterized in that** the required data are detected with the at least one sensor (6, 7) of the vehicle (5) if a location, at which the required data are to be detected, coincides with a position within a location region of the vehicle (5).

3. Method according to either of the preceding claims,
**characterized in that** a content of the at least one order is displayed on a display in the vehicle (5) as soon as the vehicle (5) approaches the location at which the at least one order is to be carried out.

4. Device for detecting location-dependent data comprising means for executing the steps of the method according to any of the preceding claims.

## Revendications

1. Procédé permettant de collecter des données dépendant de l'emplacement au moyen d'un véhicule (5), comprenant :
- la fourniture d'au moins un paquet de données (3) se rapportant à l'emplacement sur au moins un appareil externe (2) ;
- la connexion d'un appareil de communication (1) dans le véhicule (5) à l'au moins un appareil externe (2) ;
- la réception de l'au moins un paquet de données (3) se rapportant à l'emplacement en provenance de l'au moins un appareil externe (2) par l'appareil de communication (1) dans le véhicule (5) ;
- l'extraction d'au moins une tâche (3a) de l'au moins un paquet de données (3) se rapportant à l'emplacement par un appareil de commande (4) dans le véhicule (5) ;
- la détermination de la position du véhicule (5) au moyen d'un système de localisation (8) ;
- la collecte de données qui sont demandées par l'au moins une tâche (3a) à l'aide d'au moins un capteur du véhicule (5), dans lequel les données demandées sont transmises au moyen de l'appareil de communication (1) à l'au moins un appareil externe (2), dans lequel le véhicule (5) comprend en outre un système de navigation (9), dans lequel le système de navigation (9) établit un itinéraire (15) en fonction de l'emplacement où la collecte des données demandées doit être réalisée et de la position du véhicule (5), et dans lequel un terminal est couplé à l'appareil de commande (4) et/ou une application est exécutée sur un système d'infodivertissement (10) dans le véhicule (5),
**caractérisé en ce que** les données demandées sont traitées avec une application du terminal (11) avant la transmission à l'au moins un appareil externe (2) et/ou les données demandées sont traitées avec l'application sur le système d'infodivertissement (10) dans le véhicule (5) avant la transmission à l'au moins un appareil externe (2) et les données demandées sont partagées par un utilisateur dans le véhicule (5) avant la transmission,
- et **caractérisé en ce que** la collecte des données demandées est effectuée au moyen d'au moins l'un des capteurs suivants :
- capteur de température (7)
- capteur de pression
- capteur d'humidité
- capteur de pluie
- capteur de luminosité
- capteur acoustique
- capteur d'accélération
- capteur de volume
- boussole
- capteur d'odeurs
- capteur d'amortisseur contre les chocs
- gyroscope.

2. Procédé selon la revendication 1, **caractérisé en ce que** les données demandées sont collectées avec l'au moins un capteur (6, 7) du véhicule (5) lorsqu'un emplacement où la collecte des données demandées doit être réalisée coïncide avec une position dans une zone d'emplacement du véhicule (5).

3. Procédé selon l'une des revendications précédentes,
**caractérisé en ce qu'**un contenu de l'au moins une tâche est représenté sur un affichage dans le véhicule (5) dès que le véhicule (5) s'approche de l'emplacement où l'au moins une tâche doit être réalisée.

4. Dispositif permettant de collecter des données dépendant de l'emplacement comprenant des moyens permettant d'exécuter les étapes du procédé selon l'une des revendications précédentes.
